# EUROPEAN PATENT APPLICATION

(11) **EP 4 134 929 A1**
(43) Date of publication of application: **15.02.2023**
(21) Application number: 22183789.1
(22) Date of filing: 08.07.2022
(51) Int. Cl.: G07G 1/00, G07G 3/00, G06Q 20/20

(54) **MERCHANDISE TRANSACTION PROCESSING SYSTEM, MERCHANDISE REGISTRATION DEVICE, AND CONTROL METHOD FOR MERCHANDISE REGISTRATION DEVICE**

(30) Priority: 11.08.2021 JP 2021131228
(71) Applicant: Toshiba TEC Kabushiki Kaisha, Tokyo 141-8562 (JP)
(72) Inventor: Katsumata, Hiroyuki, Shinagawa-ku, Tokyo 141-8562 (JP)
(74) Representative: Bandpay & Greuter

(57) **Abstract**

According to one embodiment, a registration device for a transaction processing system includes a communication interface connected to a plurality of settlement devices via a network. The plurality of settlement devices includes a first settlement device and a second settlement device. A processor of the registration device is configured to generate settlement information required for settlement of a merchandise transaction based on the registration of items in the merchandise transaction, and then transmit the settlement information to the first settlement device. If the transmission of the settlement information to the first settlement device fails, the processor records transaction specifying information on a medium that can be given to a customer. The transaction specifying information identifies the settlement information corresponding to the merchandise transaction. The processor also store the settlement information in a storage unit when the transmission to the first settlement device fails.

## Description

### FIELD

Embodiments described herein relate generally to a transaction processing system for handling retail merchandise transaction, a merchandise registration device for a transaction processing system, and a control method for a merchandise registration device.

### BACKGROUND

In recent years, a semi-self-service type of a transaction processing system has been adopted by larger retailers. In a transaction processing system of this type, there is an input processing apparatus registers data regarding items being purchased in a sales transaction and a separate settlement apparatus that handles payments for the transaction based on the data registered by the input processing apparatus. The input processing apparatus and the settlement apparatus are disposed such that a store clerk operates the input processing apparatus and a customer operates the settlement apparatus.

In the transaction processing system of this semi-self-service type, since the store clerk performs the data input operation for items being purchased, the time required for registration is generally reduced as compared to a full self-service type system in which the customer performs both the registration and settlement operations by himself or herself.

On the other hand, in a semi-self service type system, since a customer still operates a settlement apparatus by himself or herself, it may be common for a customer unaccustomed to such operations to take a long time to complete a settlement operation. Therefore, in general, the semi-self-service type transaction includes more than one settlement apparatus for each input processing apparatus. As such, one settlement apparatus must typically be set as a master machine the other settlement apparatus (or apparatuses) set as a satellite machine.

The input processing apparatus transmits information necessary for the settlement of a transaction to the master machine. If settlement for the preceding customer is already finished and settlement processing is possible, the master machine processes the settlement of the transaction. If the settlement for the preceding customer is still on-going and the settlement processing is not presently possible, the master machine transmits the information necessary for the settlement to a satellite machine. The satellite machine processes the settlement of the transaction based on the information received from the master machine. In this way, the transaction processing system of the semi-self-service type of related art permits the two settlement apparatuses to efficiently operate to make it possible to settle many transactions in a short time.

However, the possible transmission destination to which the input processing apparatus directly transmits the information necessary for the settlement of the transaction is limited to just the master machine in such a case. Therefore, if the master machine breaks down and can no longer receive the information necessary for processing a settlement, the satellite machine may also not be able to process the settlement since the inoperable master machine might not be able to forward the necessary settlement information to the satellite.

To this end, there is provided a transaction processing system, comprising a registration machine connectable to a plurality of settlement devices via a network, the plurality of settlement devices including a first settlement device and a second settlement device. According to the present invention, the registration machine is configured to generate settlement information required for settlement of a merchandise transaction with a customer based on the registration of items in the merchandise transaction, transmit the settlement information to the first settlement device, if the transmission of the settlement information to the first settlement device fails, record transaction specifying information on a medium that can be given to the customer, the transaction specifying information identifying the settlement information corresponding to the merchandise transaction, and store the settlement information in a storage unit if the transmission of the settlement information to the first settlement device fails; and the first settlement device is configured to execute settlement processing based on the settlement information if the first settlement device is available for settlement processing, and transfer the settlement information to the second settlement device if the first settlement is unavailable for settlement processing.

Preferably, the registration machine is further configured to notify an operator if the transmission of the settlement information to the first settlement device fails.

The transaction processing system may further comprise a proxy settlement device configured to read the transaction specifying information from the medium; acquire the settlement information corresponding to the transaction specifying information from the storage unit; and execute settlement processing according to the acquired settlement information.

Preferably, the medium is paper and the transaction specifying information is encoded in a barcode printed on the paper.

Preferably, the storage unit is in a server connected to the network.

Preferably, an address of the first settlement device is stored in the storage unit.

Preferably, the address can be changed in response to a request from the second settlement device.

Preferably, the medium is paper and the transaction specifying information is encoded in a barcode printed on the paper.

Preferably, the storage unit is in a server connected to the network.

The present invention further relates to a registration device for a transaction processing system. The registration device comprises a communication interface connectable to a plurality of settlement devices via a network, the plurality of settlement devices including a first settlement device and a second settlement device; and a processor. According to the present invention, the processor is configured to generate settlement information required for settlement of a merchandise transaction with a customer based on the registration of items in the merchandise transaction, transmit the settlement information to the first settlement device, if the transmission of the settlement information to the first settlement device fails, record transaction specifying information on a medium that can be given to the customer, the transaction specifying information identifying the settlement information corresponding to the merchandise transaction, and store the settlement information in a storage unit if the transmission of the settlement information to the first settlement device fails.

Preferably, the processor is further configured to notify an operator if a transmission error occurs in the transmission of the settlement information to the first settlement device.

Preferably, an address of the first settlement device is stored in the storage unit.

Preferably, the address can be changed in response to a request from the second settlement device.

Preferably, the medium is paper and the transaction specifying information is encoded in a barcode printed on the paper.

Preferably, the storage unit is in a server connected to the network.

Preferably, the storage unit is a component of the registration device.

The registration device may further comprise a printer configured to print the transaction specifying information on a piece of paper.

The registration device may further comprise a merchandise scanner for registering items in the merchandise transaction.

The registration device may further comprise a display screen, wherein the processor is configured to control the display screen to notify an operator if a transmission error occurs in the transmission of settlement information to the first settlement device.

The present invention further relates to a non-transitory, computer-readable storage medium storing program instructions which when executed by a registration device cause the registration device to perform a method comprising:
generate settlement information required for settlement of a merchandise transaction with a customer based on the registration of items in the merchandise transaction,
transmit the settlement information to a first settlement device of a plurality of settlement devices;
if the transmission of the settlement information to the first settlement device fails, record transaction specifying information on a medium that can be given to the customer, the transaction specifying information identifying the settlement information corresponding to the merchandise transaction; and
store the settlement information in a storage unit if the transmission of the settlement information to the first settlement device fails.

The method may further comprise notify an operator if a transmission error occurs in the transmission of the settlement information to the first settlement device.

Preferably in the method, an address of the first settlement device is stored in the storage unit.

Preferably in the method, the address can be changed in response to a request from a second settlement device in the plurality of settlement devices.

### BRIEF DESCRIPTION OF THE DRAWINGS

FIG. 1 is a schematic diagram illustrating a schematic configuration of a transaction processing system according to an embodiment.
FIG. 2 is a schematic diagram illustrating a main data structure of settlement information.
FIG. 3 is a block diagram illustrating a configuration of a registration machine.
FIG. 4 is a block diagram illustrating a configuration of a checkout machine.
FIG. 5 is a block diagram illustrating a configuration of a proxy apparatus.
FIG. 6 is a flowchart of first information processing executed by a processor of a registration machine according to a registration program.
FIG. 7 is a flowchart of first information processing executed by a processor of a registration machine according to a registration program;
FIG. 8 is a flowchart of second information processing executed by a processor of a master machine according to a settlement program.
FIG. 9 is a flowchart of settlement processing.
FIG. 10 is a flowchart of third information processing executed by a processor of a satellite machine according to a settlement program.
FIG. 11 is a sequence chart when a master machine is capable of executing settlement processing.
FIG. 12 is a sequence chart when a master machine incapable of executing settlement processing.
FIG. 13 is a sequence chart when neither a master machine nor a satellite machine is capable of executing settlement processing.
FIG. 14 is a sequence chart when a master machine incapable of executing settlement processing receives a transaction file and transferring of the transaction file to a satellite machine fails.
FIG. 15 is a sequence chart when a transmitting of a transaction file to a master machine from a registration machine fails.
FIG. 16 is an example of a registration screen displayed on a registration machine.
FIG. 17 is an example of a subtotal screen displayed on a registration machine.
FIG. 18 is an example of a checkout destination notification screen displayed on a registration machine.
FIG. 19 is an example of a transmission error screen displayed on a registration machine.
FIG. 20 is an example of a payment method selection screen displayed on a checkout machine.
FIG. 21 is an example of a cash settlement screen displayed on a checkout machine.
FIG. 22 is an example of an error receipt.
FIG. 23 is a flowchart of fourth information processing executed by a processor of a satellite machine according to a settlement program.
FIG. 24 is a flowchart of sixth information processing executed by a processor of a proxy apparatus according to a proxy program.
FIG. 25 is a flowchart of fifth information processing executed by a processor of a satellite machine according to a settlement program.

### DETAILED DESCRIPTION

A problem addressed by certain embodiments is to prevent a settlement from being delayed in a transaction processing system when a settlement apparatus (checkout machine) is unable to receive a transmission of settlement information from a input processing apparatus (a registration machine

In general, according to one embodiment, a registration device for a transaction processing system includes a communication interface connected to a plurality of settlement devices via a network. The plurality of settlement devices includes a first settlement device and a second settlement device. A processor of the registration device is configured to generate settlement information required for settlement of a merchandise transaction based on the registration of items in the merchandise transaction, and then transmit the settlement information to the first settlement device. If the transmission of the settlement information to the first settlement device fails, the processor records transaction specifying information on a medium that can be given to a customer. The transaction specifying information identifies the settlement information corresponding to the merchandise transaction. The processor also store the settlement information in a storage unit when the transmission to the first settlement device fails.

Hereinafter, embodiments relating to a semi-self-service-type transaction processing system will be described with reference to the drawings.

A semi-self-service-type transaction processing system includes an input processing device and a settlement device. The input processing device is a device for inputting data of merchandise to be bought and sold in a transaction for each transaction and registering merchandise sales data. The settlement device is a device for acquiring information required for settlement of transaction including the merchandise sales data from the input processing device and processing the settlement of the transaction based on the information and payment data of a price. In the following embodiments, the input processing device is referred to as a registration machine, and the settlement device is referred to as a checkout machine.

### Configuration of Transaction Processing System

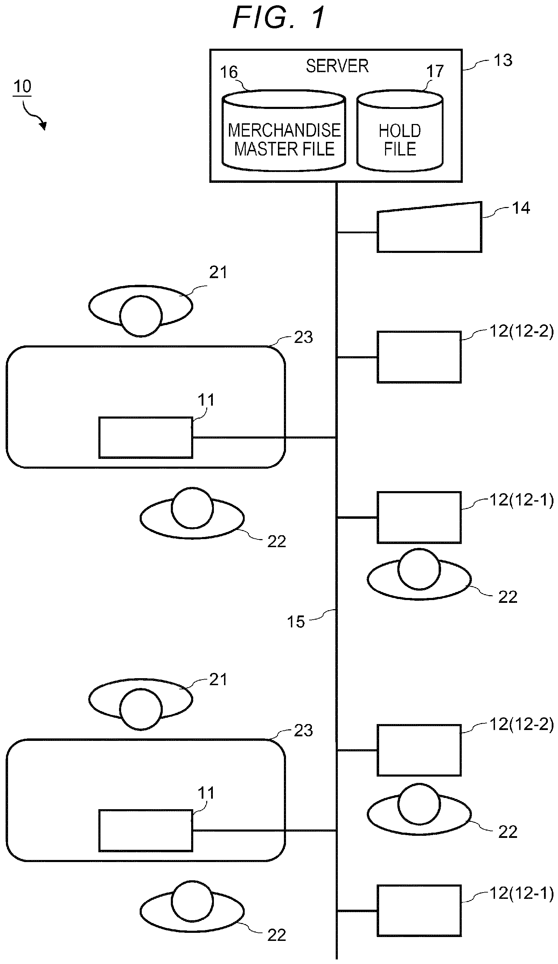

First, a configuration of a transaction processing system 10 according to the present embodiment will be described with reference to FIGS. 1 to 5.

FIG. 1 is a schematic diagram of the transaction processing system 10. The transaction processing system 10 includes a registration machine 11, a checkout machine 12, a server 13, a proxy device 14, and a network 15 connecting these portions. The type of the network 15 is not particularly limited, but a wired or wireless local area network (LAN) is generally applied.

An operator of the registration machine 11 is a clerk 21 who plays a role called a checker. The operator of the checkout machine 12 is a consumer who purchases merchandise at the store, a so-called customer 22. The registration machine 11 is attached to a work table 23 in FIG. 1. The work table 23 has a rectangular top plate. By arranging a plurality of the work tables 23 so that longitudinal directions are substantially parallel to each other, a passage for the customer 22, a so-called checkout lane, is formed.

A registration machine 11 and at least one checkout machine 12 are arranged in each checkout lane of the store. As depicted, for each checkout lane, one registration machine 11 and a plurality of checkout machines 12 are disposed. Various data signals are exchanged between the registration machine 11 and the checkout machine 12 in the same checkout lane through the network 15. The data signals may be transmitted and received via the server 13 or may be transmitted and received by another route not passing through the server 13.

In FIG. 1, an example is illustrated in which, for each of the two checkout lanes, the one registration machine 11 and the two checkout machines 12 are arranged. Of the two checkout machines 12 in each lane, one checkout machine 12-1 is set as a master machine, and another checkout machine 12-2 is set as a satellite machine. The functions of the master machine 12-1 and the satellite machine 12-2 will be explained below.

In the following, if a checkout machine 12 is not being particularly distinguished as a master machine or a satellite machine, both types can be described as a "checkout machine 12". If the checkout machine 12 is being distinguished by particular type in the description, it will be described as a "master machine 12-1" or a "satellite machine 12-2".

The server 13 includes a merchandise master file 16 and a hold file 17. The merchandise master file 16 and the hold file 17 may be stored in a storage device built in the server 13 or may be stored in a storage device connected externally to the server 13.

The merchandise master file 16 is a data file for storing a merchandise record generated on a per merchandise item basis to be sold in a store. The merchandise record is a data record that describes merchandise data such as a merchandise code, a merchandise name, a unit price, and an attribute.

The merchandise code is a unique code set on a per item or item type basis in order to identify each item of merchandise. Generally, each item has a bar code or a two-dimensional code indicating a merchandise code. Alternatively, a radio frequency identification (RFID) tag that stores the merchandise code may be attached to each item. The registration machine 11 can receive the merchandise code of the merchandise being bought in the transaction by reading the barcode, the two-dimensional code, or the RFID tag attached to the merchandise with a reading device.

The merchandise name and the unit price for the item are identified by association with the merchandise code. Additional information or attributes may be associated with the merchandise code. For example, information concerning a tax treatment of the item or item type may be provided. The information may include a tax rate, a tax type (e.g., an exclusive tax, an inclusive tax, a tax free), or the like.

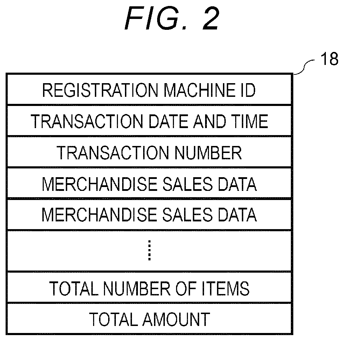

The hold file 17 is an area for temporarily retaining the transaction file generated in the registration machine 11. The transaction file is a data file describing settlement information 18 (refer to FIG. 2), which is required for settlement of the transaction.

FIG. 2 is a schematic diagram illustrating a main data structure of the settlement information 18. As illustrated in the diagram, the settlement information 18 includes items such as a transaction number, a transaction date and time, a registration machine ID, merchandise sales data, a total number of items, and a total amount. The transaction number is a serial number issued for each transaction in order to individually identify the transaction with the customer 22. The transaction date and time is a date and time when the transaction is made. The registration machine ID is identification information set in the registration machine 11 that processes the transaction. A unique registration machine ID is set in advance in each registration machine 11. The merchandise sales data includes items such as the merchandise code, the merchandise name, the unit price, the number of items sold, the sales amount, and the attribute of the merchandise purchased by the customer 22. The settlement information 18 includes merchandise sales data of all the merchandises purchased by the customer 22 in the transaction. The total number of items is a total number of items in the transaction. The total amount is a sum of the sales amount in the merchandise sales data of the transaction.

The settlement information 18 is uniquely specified by a transaction number, a transaction date and time, and a registration machine ID. That is, the transaction number, the transaction date and time, and the registration machine ID function as transaction specifying information that can uniquely identify the particular settlement information 18 from among other if present. It is noted that the transaction specifying information is not limited to the transaction number, the transaction date and time, and the registration machine ID. So long as the settlement information 18 can be identified, other items of information may be added or items may be omitted. The data structure of the settlement information 18 is not limited to the data structure illustrated in FIG. 2. Other items may be added, or items may be omitted.

FIG. 1 is referred back to for description.

The proxy device 14 is a device that executes the settlement of the transaction for which the merchandise sales data is registered by the registration machine 11 instead of the checkout machine 12. The proxy device 14 is generally not installed in a checkout lane but at, for example, a service counter in the store.

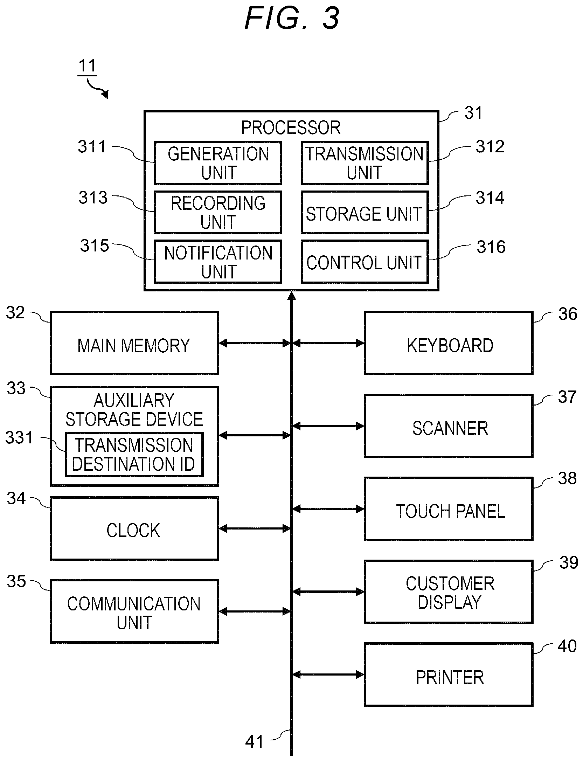

FIG. 3 is a block diagram illustrating a configuration of the registration machine 11. The registration machine 11 includes a processor 31, a main memory 32, an auxiliary storage device 33, a clock 34, a communication unit 35, a keyboard 36, a scanner 37, a touch panel 38, a customer display 39, a printer 40, a system transmission line 41, and the like. The system transmission line 41 includes an address bus, a data bus, a control signal line, and the like. The system transmission line 41 connects the processor 31 and other portions directly or via a signal input and output (I/O) circuit and transmits data signals exchanged between the processor 31 and other portions.

The registration machine 11 comprises a computer including the processor 31 to the main memory 32, the auxiliary storage device 33, the clock 34, and the communication unit 35 connected via the system transmission line 41. In registration machine 11 devices such as the keyboard 36, the scanner 37, the touch panel 38, the customer display 39, and the printer 40 ca be via the system transmission line 41.

The processor 31 controls components in order to realize various functions of the registration machine 11 according to an operating system or application program. The processor 31 is, for example, a central processing unit (CPU).

The main memory 32 includes a non-volatile memory area and a volatile memory area. The main memory 32 stores an operating system or an application program in the non-volatile memory area. The main memory 32 may store data required for the processor 31 to execute a process for controlling each portion in the non-volatile or the volatile memory area. The main memory 32 uses the volatile memory area as a work area where data is rewritten as appropriate by the processor 31. The non-volatile memory area is, for example, a read only memory (ROM). The volatile memory area is, for example, a random access memory (RAM).

For example, an electric erasable programmable read-only memory (EEPROM), a hard disk drive (HDD), a solid state drive (SSD), or the like may be used as the auxiliary storage device 33. The auxiliary storage device 33 stores data used by the processor 31 for performing various processes, data generated by the processing of the processor 31, and the like. The auxiliary storage device 33 may store an application program.

The clock 34 tracks the date and time. The processor 31 processes the date and time tracked by the clock 34 as the current date and time.

The communication unit 35 performs data communication with the server 13 and the checkout machine 12 in the same checkout lane connected via the network 15. The communication unit 35 can also perform data communication with the registration machine 11 or the checkout machine 12 in another checkout lane connected via the network 15, or the proxy device 14.

The keyboard 36 is an input device in which various keys required for inputting data related to merchandise purchased by the customer are arranged.

The scanner 37 is an example of a reading device capable of reading a code symbol such as a bar code and a two-dimensional code. The scanner 37 may be a type that reads the code symbol by scanning with a laser beam or may be a type that reads the code symbol from an image captured by an imaging device.

The touch panel 38 is a device having both an input device and a display device. The touch panel 38 displays information to the clerk who is an operator of the registration machine 11 and receives an operation input by the clerk.

The customer display 39 displays the information to the customer 22 for whom the data of the purchased merchandise is registered in the registration machine 11.

The printer 40 dispenses a receipt by printing various character strings, images, or the like on the receipt paper. As this type of the printer 40, for example, a thermal printer, a dot impact printer, or the like can be used.

As the hardware of such a registration machine 11, for example, an existing POS terminal can be used. It is noted that the device connected to the registration machine 11 is not limited to the keyboard 36, the scanner 37, the touch panel 38, the customer display 39, and the printer 40 illustrated in FIG. 3. The devices required for the purpose of the registration machine 11 may be added, or some devices may be omitted.

The registration machine 11 sets a portion of the storage area of the auxiliary storage device 33 as a storage section 331 of a transmission destination ID. The transmission destination ID is information for identifying the checkout machine 12 that is the transmission destination of the settlement information 18. A unique checkout machine ID is preset in each checkout machine 12. The registration machine 11 stores the checkout machine ID of the master machine 12-1 as the transmission destination ID in the storage section 331 by default.

In the registration machine 11 having such a configuration, the processor 31 has functions as a generation unit 311, a transmission unit 312, a recording unit 313, a storage unit 314, a notification unit 315, and a control unit 316. The generation unit 311 is a function of generating the settlement information 18 required for settlement of a transaction based on the data related to the merchandise input by the reading device or the input device. The transmission unit 312 is a function of transmitting the transaction file describing the settlement information 18 to one checkout machine 12 identified by the transmission destination ID stored in the storage section 331 among the plurality of checkout machines 12.

The recording unit 313 is a function of recording the transaction specifying information that can specify the settlement information described in the transaction file on the medium that can be passed to customer if the transmission of the transaction file to one checkout machine 12 identified by the transmission destination ID becomes an error. The medium is, for example, a receipt paper. In the present embodiment, the transaction specifying information is recorded on a medium that can be passed to the customer by printing, by a printer 69, a barcode symbol indicating the transaction specifying information including the transaction number, the transaction date and time, and the registration machine ID with a barcode on the receipt paper. The storage unit 314 is a function of storing the transaction file of which the transmission to the checkout machine 12 becomes an error in the hold file 17 of the server 13.

The notification unit 315 is a function of notifying the operator of a transmission error if the transmission of the transaction file to one checkout machine 12 identified by the transmission destination ID becomes an error. The control unit 316 is a function of allowing the storage unit 314 to store the transaction file and the recording unit 313 to record the transaction file on a medium if a checking operation for a notification of a transmission error by an operator is received and the checking operation is performed.

All the functions as the generation unit 311, the transmission unit 312, the recording unit 313, the storage unit 314, the notification unit 315, and the control unit 316 are realized by a first information processing executed by the processor 31 according to the registration program. The first information processing will be described later.

The registration program is a kind of application program stored in the main memory 32 or the auxiliary storage device 33. The method of installing the registration program in the main memory 32 or the auxiliary storage device 33 is not particularly limited. The registration program can be recorded on a removable recording medium, or the registration program can be distributed by communication via the network 15 and installed in the main memory 32 or the auxiliary storage device 33. The recording medium may be in any form as long as recording medium can store the program such as a CD-ROM and a memory card and the device can read the program.

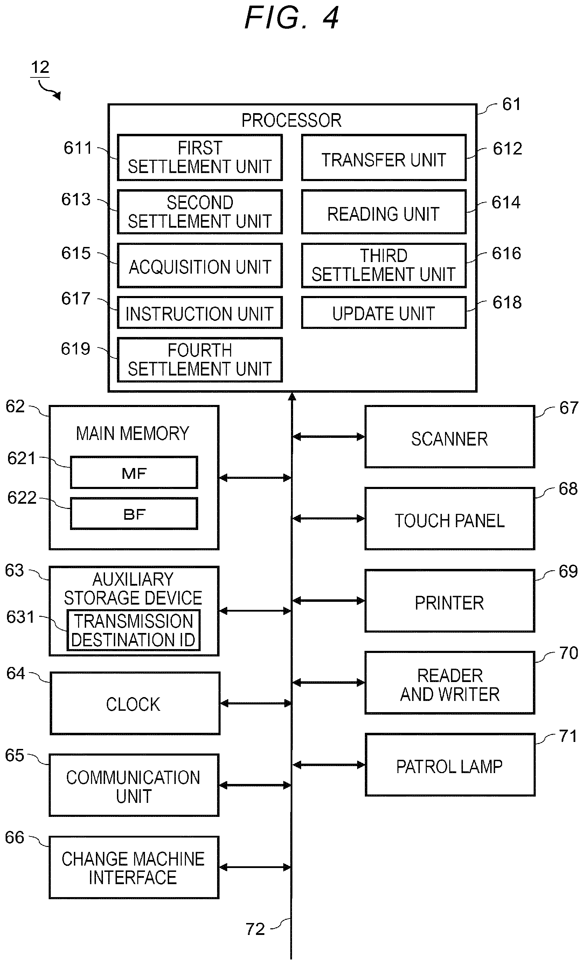

FIG. 4 is a block diagram illustrating a configuration of the checkout machine 12. It is noted that, since the master machine 12-1 and the satellite machine 12-2 have the same circuit configuration, the master machine 12-1 and the satellite machine 12-2 will be described as the checkout machine 12 without distinction in FIG. 4.

The checkout machine 12 includes a processor 61, a main memory 62, an auxiliary storage device 63, a clock 64, a communication unit 65, a change machine interface 66, a scanner 67, a touch panel 68, the printer 69, a reader-writer 70, a patrol lamp 71, a system transmission line 72, and the like. The system transmission line 72 includes an address bus, a data bus, a control signal line, and the like. The system transmission line 72 connects the processor 61 and other portions directly or via a signal input and output circuit, and transmits data signals exchanged between the processor 61 and the other portions.

The checkout machine 12 includes a computer including the processor 61 and the main memory 62, the auxiliary storage device 63, the clock 64, and the communication unit 65 connected via the system transmission line 72. In the checkout machine 12, devices such as the change machine interface 66, the scanner 67, the touch panel 68, the printer 69, the reader-writer 70, and the patrol lamp 71 can be connected via the system transmission line 72.

The processor 61 controls the components in order to realize various functions of the checkout machine 12 according to an operating system or application program. The processor 61 is, for example, a CPU.

The main memory 62 includes a non-volatile memory area and a volatile memory area. The main memory 62 stores an operating system or application program in the non-volatile memory area. The main memory 62 may store data required for the processor 61 to execute a process in the non-volatile or the volatile memory area for controlling various components. The main memory 62 uses the volatile memory area as a work area where data can be rewritten as appropriate by the processor 61. The non-volatile memory area is, for example, a ROM. The volatile memory area is, for example, a RAM.

For example, the EEPROM, the HDD, the SSD, or the like may be the auxiliary storage device 63. The auxiliary storage device 63 stores data used by the processor 61 for performing various processes, data generated by the processing of the processor 61, and the like. The auxiliary storage device 63 may store the above-described application program.

The clock 64 tracks the date and time. The processor 61 processes the date and time tracked by the clock 64 as the current date and time.

The communication unit 65 performs data communication via the network 15 to/from the server 13 or the registration machine 11 of the same checkout lane. The communication unit 65 can also perform data communication with the registration machine 11 or the checkout machine 12 in another checkout lane connected via the network 15, or the proxy device 14.

The change machine interface 66 connects to an automatic change machine. The change machine interface 66 receives, from the automatic change machine, an amount of money deposited into the automatic change machine. The change machine interface 66 outputs change data from the checkout machine 12 to the automatic change machine. The automatic change machine automatically dispenses money as change in accordance with the change data from the checkout machine 12.

The scanner 67 is an example of the reading device that reads a code symbol, such as a barcode or a two-dimensional code. The scanner 67 may be a type that reads the code symbol by scanning a laser beam or may be a type that reads the code symbol from an image captured by an imaging device.

The touch panel 68 functions as both an input device and a display device. The touch panel 68 displays information to the customer 22 and receives input operations from the customer 22.

The printer 69 dispenses a receipt by printing various character strings, images, or the like on the receipt paper. As this type of the printer 69, for example, a thermal printer, a dot impact printer, or the like can be used.

The reader-writer 70 has a function of reading data recorded on a medium such as a data storage card or a smartphone, and a function of writing data to the medium. The card may include a membership card called a member card, a point card, or the like in addition to a settlement card such as a credit card, a debit card, an electronic money card, a prepaid card, or the like. The reader-writer 70 may be any one of a magnetic type device, a contact type device, a non-contact device, and may include a plurality of types of devices.

The patrol lamp 71 (beacon light) which lights in two different colors, for example, red and blue. The patrol lamp 71 is provided on the top of a pole erected in the vicinity of the checkout machine 12 in association with the checkout machine 12 and lights or flashes, for example, in red or blue according to the state of the corresponding checkout machine 12.

As the hardware of such a checkout machine 12, for example, a POS terminal in an existing full-self-service-type transaction processing system, a so-called self-service register can be used. It is noted that, the devices connected to the checkout machine 12 are not limited to the scanner 67, the touch panel 68, the printer 69, the reader-writer 70, and the patrol lamp 71 illustrated in FIG. 4. The devices may be added, or some devices may be omitted.

The checkout machine 12 uses a portion of the storage area of the main memory 62 as a storage area 621 of a mode flag MF and a storage area 622 of a busy flag BF. The mode flag MF is 1-bit data for identifying the operation mode of the checkout machine 12. As the operation mode, there are a master mode and a satellite mode. The master mode is an operation mode for the master machine 12-1. The satellite mode is an operation mode for the satellite machine 12-2. That is, the checkout machine 12 for which the operation mode is set to the master mode becomes the master machine 12-1. Similarly, the checkout machine 12 of which operation mode is set to the satellite mode becomes the satellite machine 12-2. In the present embodiment, the mode flag MF indicating the master mode is set to "1", and the mode flag MF indicating the satellite mode is set to "0".

The busy flag BF is a 1-bit data for identifying whether or not the checkout machine 12 is processing the settlement. In the present embodiment, the busy flag BF indicating that settlement processing is in progress is set to "1," and the busy flag BF indicating that settlement processing is not in progress is set to "0".

The checkout machine 12 uses a portion of the storage area of the auxiliary storage device 63 as the storage section 631 for the transmission destination ID. The transmission destination ID is information for identifying another checkout machine 12 that is the transmission destination of the transaction file in which the settlement information 18 is described. The master machine 12-1 stores the checkout machine ID of the satellite machine 12-2 arranged in the same checkout lane as the transmission destination ID in the storage section 631 by default. Since the satellite machine 12-2 does not have the transmission destination of the transaction file, the null value is stored in the storage section 631 by default.

In the checkout machine 12, the processor 61 provides the functions of a first settlement unit 611, a transfer unit 612, a second settlement unit 613, a reading unit 614, the acquisition unit 615, a third settlement unit 616, an instruction unit 617, an update unit 618, and a fourth settlement unit 619. The first settlement unit 611 and the transfer unit 612 are functions of the checkout machines 12 operating in the master mode, that is, a master machines 12-1. The second settlement unit 613, the reading unit 614, the acquisition unit 615, the third settlement unit 616, the instruction unit 617, the update unit 618, and the fourth settlement unit 619 are functions of the checkout machines 12 operating in the satellite mode, that is, a satellite machine 12-2.

The first settling unit 611 receives a transaction file via the network 15 from the registration machine 11 disposed in the same checkout lane when settlement processing is executable. The master machine 12-1 executes settlement processing based on the settlement information 18 described in the transaction file. The transferring unit 612 transmits the transaction file to the checkout machine 12 identified by a transfer ID stored in the storing unit 631 (that is, the satellite machine 12-2 disposed in the same checkout lane).

The second settlement unit 613 executes the settlement processing based on the settlement information of the transaction file received from the master machine 12-1.

The reading unit 614 reads the transaction specifying information recorded on the medium. In the present embodiment, a barcode symbol indicating transaction specifying information is printed on a receipt paper and passed to the customer. Therefore, the reading unit 614 reads the barcode symbol with the scanner 67. The acquiring unit 615 acquires, from the retaining file 17, the settlement information 18 corresponding to the transaction specifying information read by the reading unit 614. The third settling unit 616 executes settlement processing based on the settlement information 18 acquired by the acquiring unit 615.

The instruction unit 617 instructs the registration machine 11 in the same checkout lane to switch the transmission destination for the settlement information from the master machine 12-1 to the satellite machine 12-2. The update unit 618 updates the mode flag MF from "0" (indicating the satellite mode) to "1" (indicating the master mode) if a permission response is received from the registration machine 11. The fourth settlement unit 619 executes the settlement processing based on the settlement information 18 described in the transaction file. The fourth settlement unit 619 can be referred to as a post-switching settlement unit.

All the functions of the first settlement unit 611, the transfer unit 612, the second settlement unit 613, the reading unit 614, the acquisition unit 615, the third settlement unit 616, the instruction unit 617, the update unit 618, and the fourth settlement unit 619 are realized by the second information processing, the third information processing, the fourth information processing, and the fifth information processing executed by the processor 61 according to the settlement program. The second information processing, the third information processing, the fourth information processing, and the fifth information processing will be described below.

The settlement program is a kind of application program stored in the main memory 62 or the auxiliary storage device 63. The method of installing the settlement program in the main memory 62 or the auxiliary storage device 63 is not particularly limited. The settlement program can be recorded on a removable recording medium, or the settlement program can be distributed by communication via the network 15 and installed in the main memory 62 or the auxiliary storage device 63. The recording medium may be in any form as long as the recording medium can store the program such as a CD-ROM and a memory card and the device can read the program.

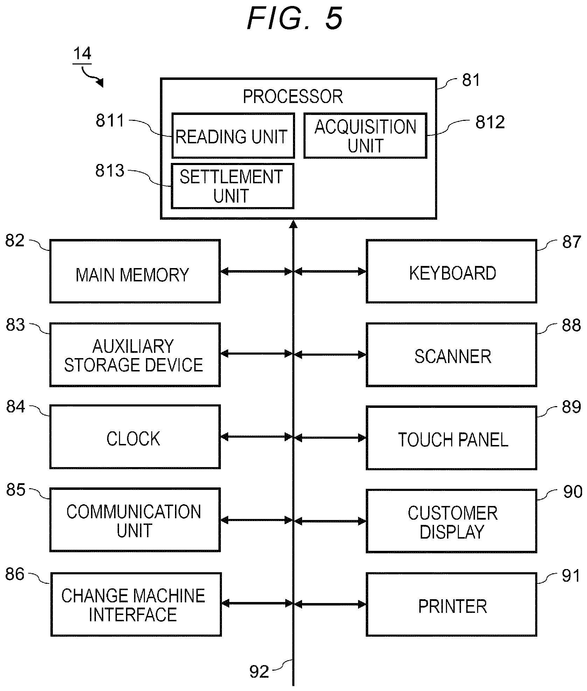

FIG. 5 is a block diagram illustrating a configuration of the proxy device 14. The proxy device 14 includes a processor 81, a main memory 82, an auxiliary storage device 83, a clock 84, a communication unit 85, a change machine interface 86, a keyboard 87, a scanner 88, a touch panel 89, a customer display 90, a printer 91, a system transmission line 92, and the like. The system transmission line 92 includes an address bus, a data bus, a control signal line, and the like. The system transmission line 92 connects the processor 81 and other portions directly or via a signal input and output circuit, and transmits data signals exchanged between the processor 81 and the other portions.

The proxy device 14 comprises a computer including the processor 81, the main memory 82, the auxiliary storage device 83, the clock 84, and the communication unit 85, which are connected via the system transmission line 92. Devices such as the change machine interface 86, the keyboard 87, the scanner 88, the touch panel 89, the customer display 90, and the printer 91 may be connected via the system transmission line 92.

The processor 81 controls various components and sub-units in order to realize various functions as the proxy device 14 according to an operating system or application program. The processor 81 is, for example, a CPU.

The main memory 82 includes a non-volatile memory area and a volatile memory area. The main memory 82 stores an operating system or an application program in the non-volatile memory area. The main memory 82 may store data required for the processor 81 to execute a process for controlling each portion in the non-volatile or the volatile memory area. The main memory 82 uses the volatile memory area as a work area where data is rewritten as appropriate by the processor 81. The non-volatile memory area is, for example, the ROM. The volatile memory area is, for example, the RAM.

For example, an EEPROM, a HDD, a SSD, or the like may be used as the auxiliary storage device 83. The auxiliary storage device 83 stores data used by the processor 81 for performing various processes, data generated by the processing of the processor 81, and the like. The auxiliary storage device 83 may store the application program.

The clock 84 tracks the date and time. The processor 81 processes the date and time tracked by the clock 84 as the current date and time.

The communication unit 85 performs data communication with the server 13 connected via the network 15. The communication unit 85 can also perform data communication with the registration machine 11 or the checkout machine 12 in each checkout lane connected via the network 15.

The change machine interface 86 connects to an automatic change machine. The change machine interface 86 receives, from the automatic change machine, an amount data of money deposited into the automatic change machine. The change machine interface 86 outputs change data from the proxy apparatus 14 to the automatic change machine. The automatic change machine automatically dispenses money as change in accordance with the change data.

The keyboard 87, the scanner 88, the touch panel 89, the customer display 90, and the printer 91 can be applied as the same ones as the keyboard 36, the scanner 37, the touch panel 38, the customer display 39, and the printer 40 in the registration machine 11. That is, for example, an existing POS terminal can be used as the hardware of the proxy device 14. It is noted that the device connected to the proxy device 14 is not limited to the keyboard 87, the scanner 88, the touch panel 89, the customer display 90, and the printer 91 illustrated in FIG. 5. The devices related to uses of the proxy device 14 may be added or devices may be omitted.

In the proxy device 14, the processor 81 provides the functions of a reading unit 811, an acquisition unit 812, and a settlement unit 813.

The reading unit 811 reads the transaction specifying information recorded on a medium. That is, the reading unit 811 can read, with scanner 88, the barcode symbol printed on receipt paper. The acquisition unit 812 acquires the settlement information 18 specified by the transaction specifying information read by the reading unit 811 from the hold file 17 which is the storage section. The settlement unit 813 executes the settlement processing based on the settlement information 18 acquired by the acquisition unit 812.

All the functions as the reading unit 811, the acquiring unit 812, and the settlement unit 813 are realized by the sixth information processing executed by the processor 81 according to the proxy program. The sixth information processing will be described below.

The proxy program is a kind of application program stored in the main memory 82 or the auxiliary storage device 83. The method of installing the proxy program in the main memory 82 or the auxiliary storage device 83 is not particularly limited. The proxy program can be recorded on a removable recording medium, or the proxy program can be distributed by communication via the network 15 and installed in the main memory 62 or the auxiliary storage device 63. The recording medium may be in any form as long as recording medium can store the program such as a CD-ROM and a memory card and the device can read the program.

### Operation of Transaction Processing System

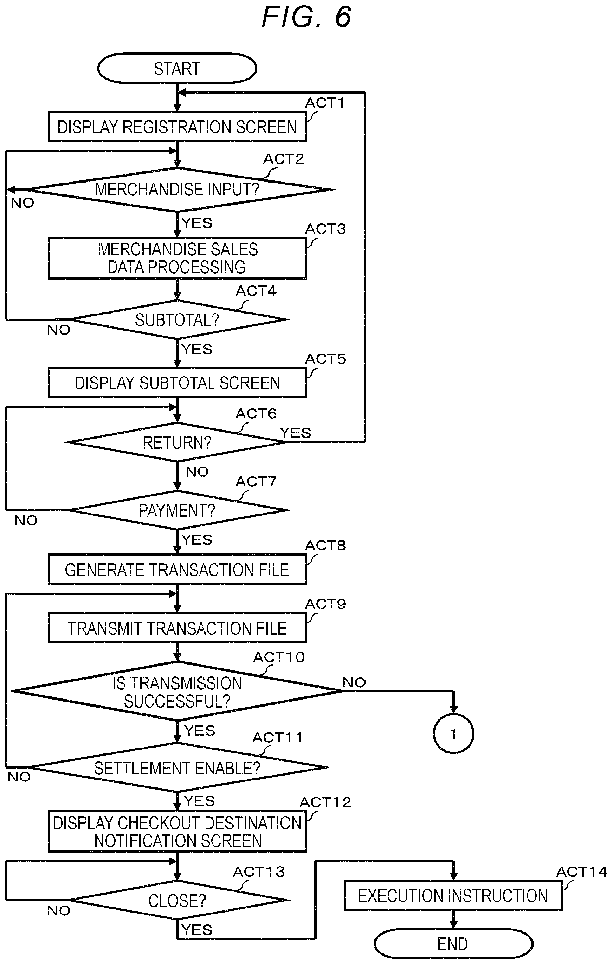

The operation of the transaction processing system 10 will be described with reference to FIGS. 6 to 25. It is noted that, the operation described below is an example. If the same effect can be obtained, the procedure or the content of the processing can be changed as appropriate.

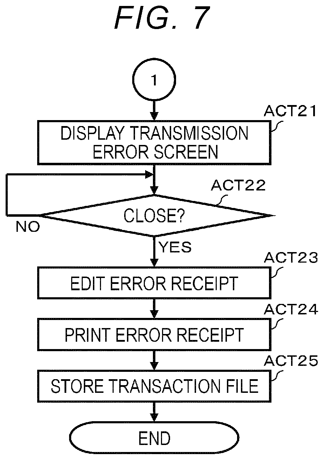

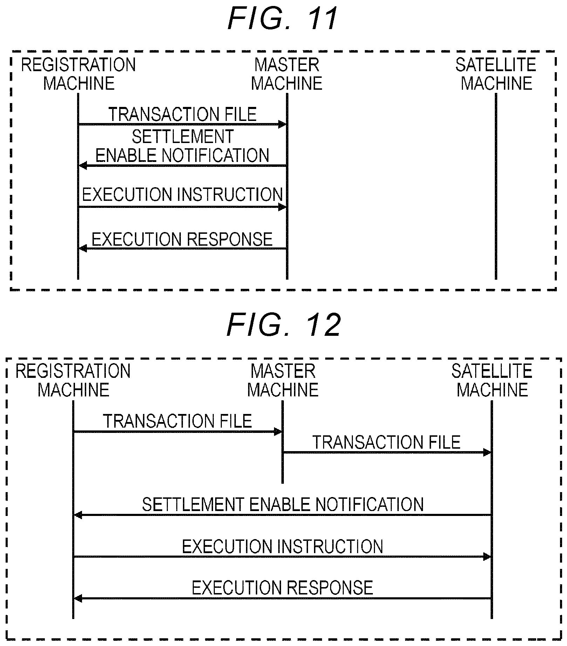

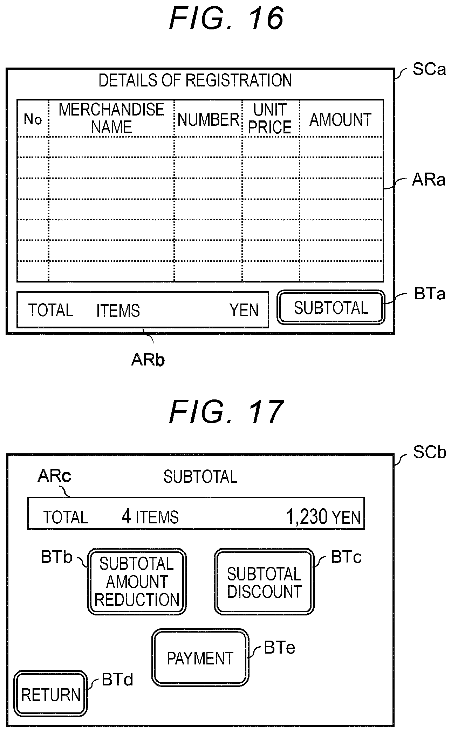

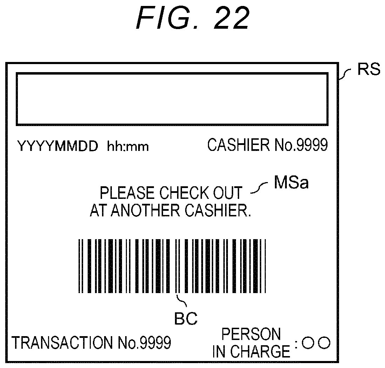

First, the main operation of the registration machine 11 will be described with reference to FIGS. 6 and 7, FIGS. 11 to 19 and 22. FIGS. 6 and 7 are flowcharts illustrating the first information processing procedure executed by the processor 31 of the registration machine 11 according to the registration program. FIGS. 11 to 15 are sequence diagrams of the main data signals exchanged between the registration machine 11, the master machine 12-1, and the satellite machine 12-2. FIGS. 16 to 19 are examples of various screens SCa, SCb, SCc, and SCd displayed on the touch panel 38, which is a display device of the registration machine 11. FIG. 22 is an example of the error receipt RS to be printed and dispensed by the printer 40 of the registration machine 11.

The customer 22 places the merchandise to be purchased into a shopping basket or the like and heads for the check-out lane. When the customer 22 arrives at the checkout lane, the clerk 21 (playing the role of the checker) performs an operation of declaring the start of registration to the registration machine 11. By this operation, the registration program of the registration machine 11 is activated and the processor 31 starts the first information processing of which the procedure is illustrated in the flowchart of FIG. 6.

The processor 31 causes the touch panel 38 to display the registration screen SCa (refer to FIG. 16) as ACT 1.

FIG. 16 is an example of the registration screen SCa. The registration screen SCa is a screen in which a detail area ARa and a total area ARb are arranged, and an icon of a subtotal button BTa is further arranged. The detail area ARa is an area for displaying a merchandise name, a number, a unit price, and an amount in a list format in the order of a series of numbers. It is noted that the items displayed in the detail area ARa are not limited to the merchandise name, the number, the unit price, and the amount. Other items may be added, or any item, for example, the amount, may be omitted. The total area ARb is an area for displaying the total number (items) and the total amount (yen) displayed in the detail area ARa. It is noted that the items displayed in the total area ARb are not limited to the total number and the total amount. Other items may be added, or any item, for example, the total number, may be omitted. The subtotal button BTa is an operator that is selected by the clerk 21 to instruct the subtotal output of the merchandise purchased by the customer 22.

FIG. 6 is referred back to for description.

The processor 31 waits for data related to the merchandise to be input as ACT 2. The barcodes indicating the merchandise codes which are the identification information of the merchandises are attached to many merchandises. Therefore, the clerk 21 operates the scanner 37 to read the barcode attached to the purchased merchandise of the customer 22. If the barcode is read by the scanner 37, the merchandise code of the purchased merchandise is input to the registration machine 11. In some cases, a barcode may not be attached to some types of merchandise such as fresh food. If the barcode is not attached to the purchased merchandise, the clerk 21 touches the merchandise button corresponding to the purchased merchandise from the merchandise button group displayed on the touch panel 38. If the merchandise button is touched, the merchandise code of the merchandise corresponding to the merchandise button is input to the registration machine 11.

If the merchandise code is input, the processor 31 determines YES in ACT 2 and proceeds to ACT 3. The processor 31 executes the merchandise sales data processing as ACT 3. That is, the processor 31 acquires merchandise data such as a merchandise name, a unit price, and an attribute from the merchandise record of the merchandise identified by the merchandise code input via the scanner 37 or the touch panel 38. Then, the processor 31 registers the merchandise sales data including the items such as the merchandise code, the merchandise name, the unit price, the number of items sold, the sales amount, and the attributes in the transaction memory. The transaction memory is a portion of the volatile memory area in the main memory 32.

The processor 31 completing the merchandise sales data processing checks whether or not the subtotal button BTa is input as ACT 4.

The clerk sequentially performs an operation for inputting the merchandise code of the purchased merchandise of the customer 22. Then, if the merchandise codes of all the purchased items of merchandise have been input, the subtotal button BTa is selected.

If the subtotal button BTa is not input and the merchandise code of the next merchandise is input, the processor 31 determines NO in ACT 4, YES in ACT 2, and proceeds to ACT 3. That is, the processor 31 executes the merchandise sales data processing. As a result, the merchandise sales data of the purchased merchandise is registered in the transaction memory.

If the subtotal button BTa is input, the processor 31 determines YES in ACT 4 and proceeds to ACT 5. The processor 31 displays the subtotal screen SCb (refer to FIG. 17) as ACT 5.

FIG. 17 is an example of the subtotal screen SCb. The subtotal screen SCb is a screen in which a total area ARc is arranged, and icons of a subtotal amount reduction button BTb, a subtotal discount button BTc, a return button BTd, and a payment button BTe are arranged. The total area ARc is the same as the total area ARb of the registration screen SCa. The subtotal amount reduction button BTb and the subtotal discount button BTc are operators that are selected by the clerk 21 to instruct amount reduction or discount on the total amount. The return button BTd is an operator that is selected by the clerk 21 to instruct returning to the immediately preceding registration screen SCa. The payment button BTe is an operator that is selected by the clerk 21 to instruct payment of the price.

The clerk 21 selects the payment button BTe if all the data of the items to be purchased has been input and there is no need for a price reduction or discount or other adjustment to the transaction. To perform a subtotal amount reduction or subtotal discount, the clerk 21 selects the subtotal amount reduction button BTb or the subtotal discount button BTc. If the data input for a purchased item remains to be performed, the clerk 21 selects the return button BTd.

FIG. 6 is referred back to for description.

The processor 31 controlling the display of the subtotal screen SCb checks whether or not the return button BTd is input as ACT 6. If the return button BTd is not input, the processor 31 determines NO in ACT 6 and proceeds to ACT 7. The processor 31 checks whether or not the payment button BTe is input as ACT 7. If the payment button BTe is not input, the processor 31 determines NO in ACT 7 and returns to ACT 6. Herein, the processor 31 waits for the return button BTd to be input or waits for the payment button BTe to be input in ACT 6 and ACT 7. It is noted that, if the subtotal amount reduction button BTb or the subtotal discount button BTc is input in the standby state, the processor 31 performs the subtotal amount reduction processing or the subtotal discount processing, although not illustrated. After that, the processor 31 returns to the standby state of ACT 6 and ACT 7.

In the standby state of ACT 6 and ACT 7, if the return button BTd is input by the clerk 21, the processor 31 determines YES in ACT 6 and returns to ACT 1. That is, the processor 31 returns the screen of the touch panel 38 to the registration screen SCa. Then, the processor 31 executes the processing after ACT 2 in the same manner as described above.

If the payment button BTe is input by the clerk 21 in the standby state of ACT 6 and ACT 7, the processor 31 determines YES in ACT 7 and proceeds to ACT 8. The processor 31 generates the transaction file as ACT 8. That is, the processor 31 generates the transaction file describing the settlement information 18 required for the settlement of the transaction from merchandise sales data of each purchased merchandise registered in the transaction memory, a data of the total number of items and the total amount, a data capable of specifying a transaction such as a transaction number, a transaction date and time, and registration machine ID, that is, transaction specifying information. Then, the processor 31 controls the transmission of the transaction file to the checkout machine, as a destination, identified by the transmission destination ID set in the storage section 331 as ACT 9. That is, if the checkout machine ID of the master machine 12-1 is set in the storage section 331 by default, the processor 31 controls the transmission of the transaction file to the master machine 12-1 as the destination. By this control, the transaction file is transmitted from the communication unit 35 to the master machine 12-1 in the same checkout lane via the network 15.

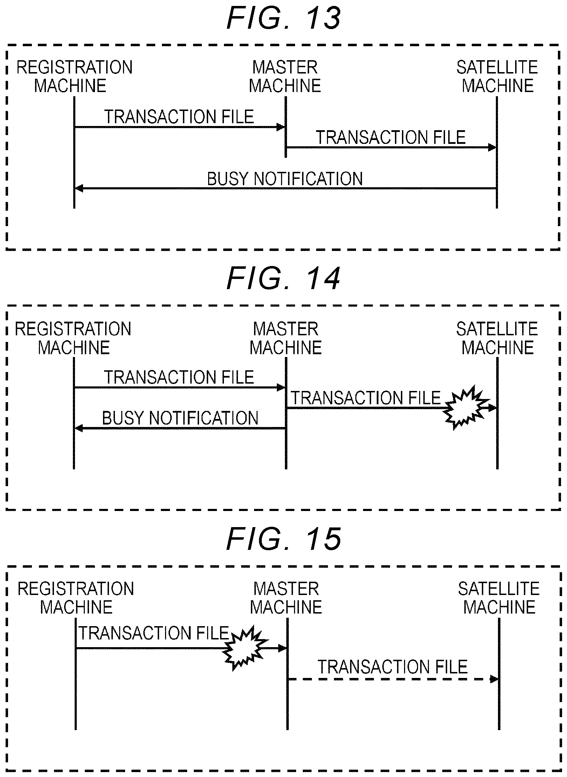

FIG. 11 is a sequence diagram if the master machine 12-1 capable of executing the settlement processing receives the transaction file. FIGS. 12 to 14 are sequence diagrams if the master machine 12-1 incapable of executing the settlement processing receives the transaction file. FIG. 15 is a sequence diagram if the master machine 12-1 cannot receive the transaction file.

As illustrated in FIG. 11, if the master machine 12-1 capable of executing the settlement processing receives the transaction file, the master machine 12-1 transmits a settlement enable notification command to the registration machine 11. The registration machine 11 which received the settlement enable notification command transmits an execution instruction command to the master machine 12-1. The master machine 12-1 which received the execution instruction command transmits an execution response command to the registration machine 11.

As illustrated in FIGS. 12 to 14, if the master machine 12-1 incapable of executing the settlement processing receives the transaction file, the master machine 12-1 transmits the transmission file to the satellite machine 12-2 identified by the transmission destination ID set in the storage section 631. Herein, if the satellite machine 12-2 can execute the settlement processing, the satellite machine 12-2 transmits the settlement enable notification command to the registration machine 11 as illustrated in FIG. 12. The registration machine 11 which received the settlement enable notification command transmits an execution instruction command to the satellite machine 12-2. The satellite machine 12-2 which received the execution instruction command transmits the execution response command to the registration machine 11.

If the satellite machine 12-2 cannot execute the settlement processing, the satellite machine 12-2 transmits a busy notification command to the registration machine 11 as illustrated in FIG. 13.

If the transmission of the transaction file from the master machine 12-1 to the satellite machine 12-2 fails, the master machine 12-1 transmits the busy notification command to the registration machine 11 as illustrated in FIG. 14.

If the transmission of the transaction file from the registration machine 11 to the master machine 12-1 fails, there is no notification command from the master machine 12-1 or the satellite machine 12-2 to the registration machine 11 as illustrated in FIG. 15. Of course, the transmission file is not transmitted from the master machine 12-1 to the satellite machine 12-2.

FIG. 6 is referred back to for description.

The processor 31 controlling the transmission of the transaction file checks whether or not the transmission of the transaction file succeeds as ACT 10. If the transmission of the transaction file succeeds, the processor 31 determines YES in ACT 10 and proceeds to ACT 11. The processor 31 checks whether or not the settlement enable notification command is received as ACT 11. If the busy notification command is received from the master machine 12-1 or the satellite machine 12-2 instead of the settlement enable notification command, the processor 31 determines NO in ACT 11 and returns to ACT 9. The processor 31 re-transmits the transmission file to the master machine 12-1. By this re-transmission, for example, if the master machine 12-1 can execute the settlement processing, the settlement enable notification command is transmitted from the master machine 12-1 to the registration machine 11. For example, if the satellite machine 12-2 can execute the settlement processing, the settlement enable notification command is transmitted from the satellite machine 12-2 to the registration machine 11.

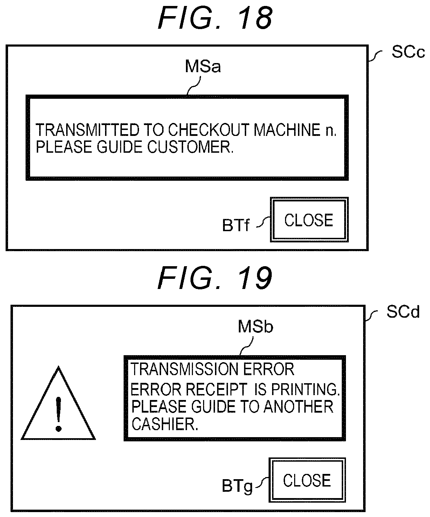

If the settlement enable notification command is received from the master machine 12-1 or the satellite machine 12-2, the processor 31 determines YES in ACT 11 and proceeds to ACT 12. The processor 31 causes the touch panel 38 to display a checkout destination notification screen SCc (refer to FIG. 18) as ACT 12.

FIG. 18 is an example of the checkout destination notification screen SCc. An icon of a close button BTf is arranged together with the message MSa on the checkout destination notification screen SCc. The close button BTf is an operator that is selected by the clerk 21 after the content of the message MSa has been checked.

The message MSa is a content that notifies the clerk 21 of the checkout machine 12 to which the transaction file is transmitted. The settlement enable notification command includes a checkout machine ID that identifies the checkout machine 12 that is the transmission source of the settlement enable notification command. That is, the settlement enable notification command transmitted from the master machine 12-1 includes a checkout machine ID of the master machine 12-1. The settlement enable notification command transmitted from the satellite machine 12-2 includes a checkout machine ID of the satellite machine 12-2. If the settlement enable notification command including the checkout machine ID of the master machine 12-1 is received, the message MSa is the content of notifying that the transmission destination of the transaction file is the master machine 12-1. If the settlement enable notification command including the checkout machine ID of the satellite machine 12-2 is received, the message MSa is the content of notifying that the transmission destination of the transaction file is the satellite machine 12-2.

The clerk 21 who checked the message MSa guides the customer 22 to the master machine 12-1 or the satellite machine 12-2 according to the message MSa. Then, the clerk 21 presses the close button BTf.

The processor 31 controlling the display of the checkout destination notification screen SCc waits for the close button BTf to be input as ACT 13. If the close button BTf is input, the processor 31 determines YES in ACT 13 and proceeds to ACT 14. The processor 31 transmits the execution instruction command to the checkout machine 12 which is the transmission source of the settlement enable notification command as ACT 14. As described above, the processor 31 completes the first information processing if the transmission of the transmission file succeeds.

On the other hand, if the transmission of the transmission file fails, the processor 31 determines NO in ACT 10 and proceeds to ACT 21 of FIG. 7. The processor 31 causes the touch panel 38 to display the transmission error screen SCd (refer to FIG. 19) as ACT 21.

FIG. 19 is an example of the transmission error screen SCd. An icon of the close button BTg is arranged together with the message MSb on the transmission error screen SCd. The close button BTg is an operator that is selected by the clerk 21 after the message MSb has been checked.

The message MSb is a content notifying the clerk 21 that the transmission of the transaction file becomes an error, that the error receipt RS is printed, and that the customer is guided to another cashier. The error receipt RS will be described later. If the satellite machine 12-2 in the same checkout lane is vacant, another cashier is preferably the satellite machine 12-2. Another registration machine may be the proxy device 14 installed in a service counter or the like. For example, if the satellite machine 12-2 in the adjacent checkout lane is vacant, the other register may be the satellite machine 12-2 in the adjacent lane. The clerk 21 then selects the close button BTb after the message MSb is checked.

The processor 31 waits for the close button BTb to be input as ACT 22. When the close button BTb is selected, the processor 31 determines YES in ACT 22 and proceeds to ACT 23.

The processor 31 edits the print data of the error receipt RS as ACT 23. As illustrated in FIG. 22, the error receipt RS includes the transaction date and time (YYYYMMDD hh:mm), the registration machine ID (Registration No. 9999), the transaction number (Transaction No. 9999), and the name of the clerk 21 (Person in Charge: OO), the message MSc notifying that the checkout will be made at another cashier, and the barcode BC. The barcode BC also indicates (e.g., encodes) the transaction date and time, the registration machine ID, and the transaction number.

It is noted that the content of the message MSc is not limited to the content illustrated in FIG. 22. As described above, the other register is assumed to be a satellite machine 12-2 or a proxy device 14. Therefore, instead of the close button BTb, a button for designating whether the other register is the satellite machine 12-2 or the proxy device 14 can be displayed on the transmission error screen SCd. Then, if the clerk 21 selects the satellite machine 12-2, a message instructing to checkout at the satellite machine 12-2 is displayed on the error receipt RS. If the clerk 21 selects the proxy device 14, a message instructing to checkout at the proxy device 14 is displayed on the error receipt RS. By adopting such a configuration, the customer 22 can perform settlement at the instructed location without confusion even if the transaction file is not transmitted from the registration machine 11 to the checkout machine 12 or is different from the usual one. In this case, it is more effective to print a map or other guidance on the error receipt RS illustrating the location where the satellite machine 12-2 or the proxy device 14 is installed.

The processor 31 activates the printer 40 as ACT 24 and prints the print data of the error receipt RS on the receipt paper. Further, the processor 31 stores the transaction file that failed to be transmitted as ACT 25 in the hold file 17 of the server 13 via the network 15. As described above, the processor 31 completes the first information processing if the transmission of the transmission file fails.

As described above, the processor 31 of the registration machine 11 realizes the function of the generation unit 311 by the processing of ACT 8 of FIG. 6. The processor 31 realizes the function of the transmission unit 312 by the processing of ACT 9 of FIG. 6. The processor 31 realizes the function of the recording unit 313 by the processing of ACT 23 and ACT 24 of FIG. 7. The processor 31 realizes the function of the storage unit 314 by the processing of ACT 25 of FIG. 7. The processor 31 realizes the function of the notification unit 315 by the processing of ACT 21 of FIG. 7. The processor 31 realizes the function of the control unit 316 by the processing of ACT 22 to ACT 25 of FIG. 7.

By these functions, the registration machine 11 transmits the transaction file in which the settlement information is described to the master machine 12-1 arranged in the same checkout lane. At that time, if the transmission of the transaction file fails due to the disorder of the master machine 12-1, the registration machine 11 causes the touch panel 38 to display the transmission error screen SCd to notify the clerk 21 that the transmission of the transaction file fails. If the clerk selects the close button BTg, the registration machine 11 prints and dispenses the error receipt RS with the printer 40. The registration machine 11 also saves the transaction file for which the transmission failed in the hold file 17 of the server 13.

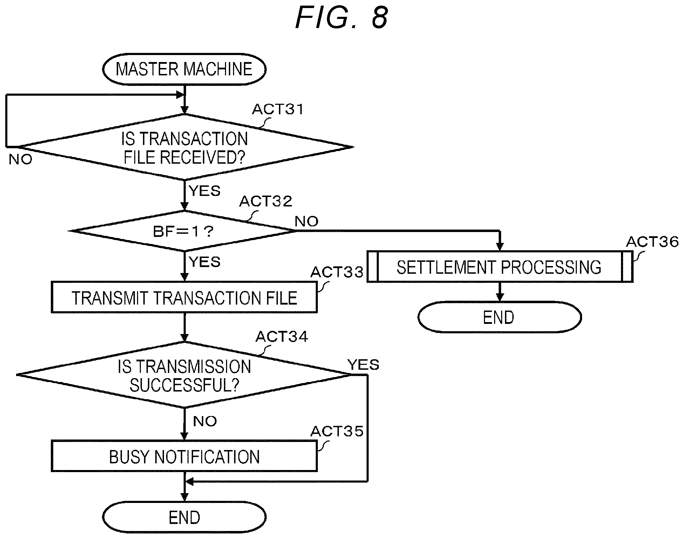

Subsequently, the main operation of the master machine 12-1 will be described with reference to FIGS. 8, 9, 20, and 21. It is noted that, in the following, for each component of the checkout machine 12 illustrated in FIG. 4, the reference numeral is denoted with a suffix "-1" for the master machine 12-1, and the reference numeral is denoted with a suffix "-2" for the satellite machine 12-2.

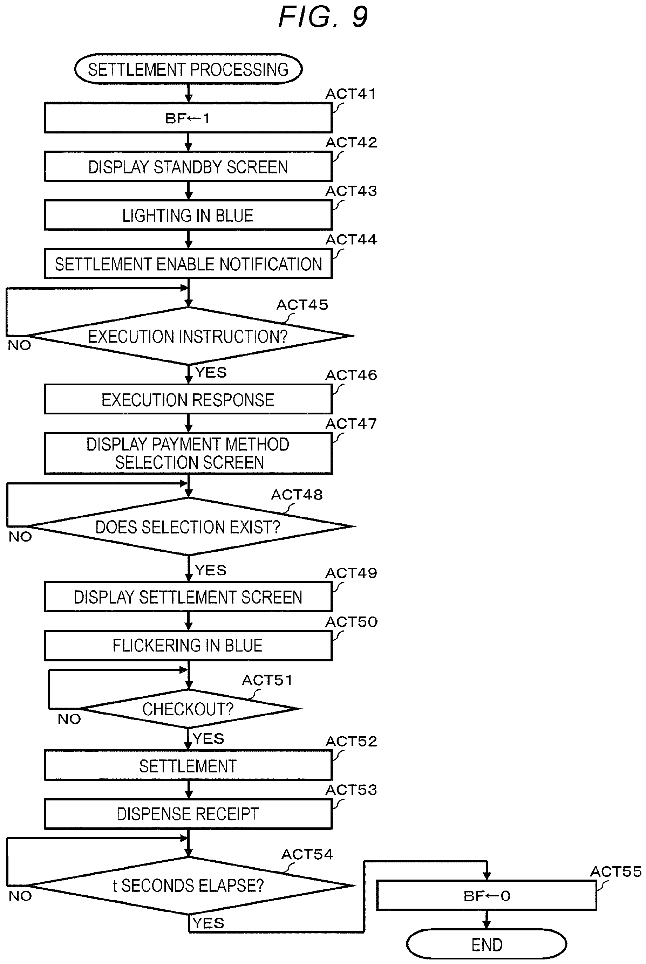

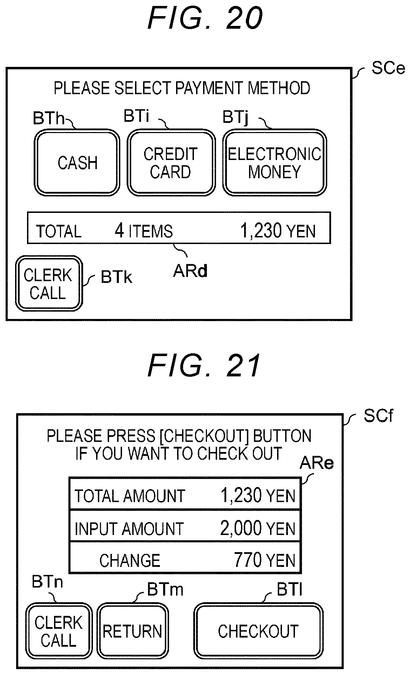

FIG. 8 is a flowchart illustrating a second information processing procedure executed by a processor 61-1 of the master machine 12-1 according to the settlement program. FIG. 9 is a flowchart illustrating a specific settlement processing procedure. FIGS. 20 and 21 are examples of various screens SCe and SCf displayed on a touch panel 68-1 which is a display device of the master machine 12-1.

The processor 61-1 waits for the reception of the transaction file as ACT 31. If a communication unit 65-1 receives the transaction file transmitted from the registration machine 11 arranged in the same checkout lane, the processor 61-1 determines YES in ACT 31 and proceeds to ACT 32. The processor 61-1 examines the busy flag BF as ACT 32.

If the busy flag BF is "1", that is, the settlement of the previous customer is still being processed, the processor 61-1 determines YES in ACT 32 and proceeds to ACT 33. The processor 61-1 causes the transmission of the transaction file to a checkout machine identified by the transmission destination ID set in a storage section 631-1 as ACT 33. That is, if the checkout machine ID of the satellite machine 12-2 is set in the storage section 631-1 by default, the processor 61-1 transmits the transaction file to the satellite machine 12-2. By this control, the transaction file is transmitted from the communication unit 65-1 to the satellite machine 12-2 via the network 15.

The processor 61-1 checks whether or not the transmission of the transaction file succeeds as ACT 34. If the transmission of the transaction file succeeds, the processor 61-1 determines YES in ACT 34 and completes the second information processing.

If the transmission of the transaction file fails, the processor 61-1 determines NO in ACT 34 and proceeds to ACT 35. The processor 61-1 controls to transmit a busy notification command to the registration machine 11 as ACT 35. By this control, as described in the sequence diagram of FIG. 14, the busy notification command is transmitted from the master machine 12-1 to the registration machine 11. As described above, the processor 61-1 completes the second information processing.

On the other hand, if the busy flag BF is "0", that is, if the transaction file was received during an idle period in which the settlement processing is not being executed, the processor 61-1 determines NO in ACT 32 and proceeds to ACT 36. The processor 61-1 executes the settlement processing as ACT 36.

That is, the processor 61-1 changes the busy flag BF to "1" as ACT 41 of FIG. 9. The processor 61-1 then sets the screen of the touch panel 68-1 to be the standby screen as ACT 42. The standby screen is a screen that displays a message such as "please wait for a while" and instructs the customer 22 to wait for the operation. Further, the processor 61-1 turns on the patrol lamp 71 in blue as ACT 43.

If the processing of ACT 41 to ACT 43 is completed, the processor 61-1 controls to transmit the settlement enable notification command to the registration machine 11 as ACT 44. By this control, as described in the sequence diagram of FIG. 11, the settlement enable notification command is transmitted from the master machine 12-1 to the registration machine 11. The settlement enable notification command includes a checkout machine ID of the master machine 12-1. As a result, as described above, in the registration machine 11, the checkout destination notification screen SCc including the message MSa for guiding the customer to the master machine 12-1 is displayed.

The processor 61-1 which transmitted the settlement enable notification command waits for the execution instruction command as ACT 45. If the execution instruction command is received from the registration machine 11, the processor 61-1 controls to transmit the execution response command to the registration machine 11 as ACT 47. Further, the processor 61-1 updates the screen of the touch panel 68-1 as ACT 47 to the payment method selection screen SCe (refer to FIG. 20).

FIG. 20 is an example of the payment method selection screen SCe. The payment method selection screen SCe is a screen in which the total area ARd is arranged, and the icons of the cash button BTh, the credit button BTi, the electronic money button BTj, and the clerk call button BTk are arranged. The total area ARd is an area for displaying the total number of items and the total amount included in the transaction file acquired from the registration machine 11. The cash button BTh is an operator that is selected by the customer 22 for cash as a payment method. The credit button BTi is an operator that is selected by the customer 22 for a credit card as a payment method. The electronic money button BTj is an operator that is selected by the customer 22 for electronic money as a payment method. The clerk call button BTk is an operator that can be selected for the customer 22 to call the clerk.

The cash button BTh, the credit button BTi, and the electronic money button BTj permit selecting of a payment method. It is noted that the payment method is not limited to these three types, that is, cash, credit card, and electronic money. In other examples, just two of these types may be available, or in other examples another payment method may be selectable. It is noted that there may be only one payment method available. In that case, instead of the cash button BTh, the credit button BTi, and the electronic money button BTj, an operator for instructing the settlement start, for example, the icon of the settlement start button may be displayed on the payment method selection screen SCe.

The customer 22 for whom the master machine 12-1 is designated as the checkout destination by the clerk 21 moves to the installation location of the master machine 12-1. Then, if the payment method selection screen SCe is displayed on the touch panel 68-1 of the master machine 12-1, the button corresponding to the desired payment method is selected. That is, a customer who desires to pay by cash presses the cash button BTh, a customer who desires to pay by credit card presses the credit button BTi, and a customer who desires to pay by electronic money presses the electronic money button BTj.

The processor 61-1 waits for one of the payment methods to be selected as ACT 48. Then, after the payment method is selected, the processor 61-1 determines YES in ACT 48 and proceeds to ACT 49. The processor 61-1 updates the screen of the touch panel 68-1 to a settlement screen SCf (refer to FIG. 21) as ACT 49. The processor 61-1 also flickers the patrol lamp 71 in blue as ACT 50.

FIG. 21 is the settlement screen SCf if cash is selected as the payment method. The settlement screen SCf is a screen in which the display area ARe of the total amount, the input amount, and the change amount is arranged, and the icons of the checkout button BTI, the return button BTm, and the clerk call button BTn are further arranged. It is noted that, although not specifically illustrated, the checkout button BTI, the return button BTm, and the clerk call button BTn icons can also be arranged on the settlement screen when credit card or electronic money is selected as the payment method.

The customer 22 after inserting cash of the total amount or more into the automatic change machine next presses the checkout button BT1. A customer 22 who desires to change to a payment method to other than cash presses the return button BTm. If calling the clerk, the customer 22 presses the clerk call button BTn. If the return button BTm is pressed, the screen of the touch panel 68-1 returns to the payment method selection screen SCe.

The processor 61-1 waits for the checkout button BT1 to be input as ACT 51. Then, after the checkout button BT1 is input, the processor 61-1 determines YES in ACT 51 and proceeds to ACT 52. The processor 61-1 executes the settlement of the transaction as ACT 52. If cash is selected as the payment method, the processor 61-1 executes the process of calculating the change due and paying out the change due from the automatic change machine. If a credit card is selected as the payment method, the processor 61-1 performs authentication of the credit card read by a reader-writer 70-1, and determines the total amount as the credit settlement amount on condition of being approved by the server 13. If electronic money is selected as the payment method, the processor 61-1 subtracts the total amount from the balance of the electronic money medium read by the reader-writer 70-1.

After the settlement of the transaction is completed by any of the available methods, the processor 61-1 controls a printer 69-1 as ACT 53 and dispenses the transaction receipt. The transaction receipt is printed with the settlement information 18, that is, the transaction number, the transaction date and time, the registration machine ID, the merchandise sales data, the total number of items, the total amount, and the like.

The processor 61-1 waits for t seconds to elapse as ACT 54. The time of t seconds is an estimated time required for the customer 22 who received the transaction receipt to be go away from the checkout machine 12. The value of t seconds can be arbitrarily selected by the system administrator and is preferably around 10 seconds.

When t seconds elapse, the processor 61-1 determines YES in ACT 54 and proceeds to ACT 55. The processor 61-1 returns the busy flag BF to "0" as ACT 55. As described above, the processor 61-1 completes the second information processing.

In this way, the processor 61-1 of the master machine 12-1 realizes the function of the first settlement unit 611 by the processing of ACT 31, ACT 32, and ACT 36. The processor 61-1 realizes a function of the transfer unit 612 by the processing of ACT 31, ACT 32, and ACT 33.

Then, if the master machine 12-1 receives the transaction file from the registration machine 11 in the same checkout lane via the network 15 in a state where the settlement processing can be executed by these functions, the settlement processing is executed based on the settlement information 18 described in the transaction file. Further, if the transaction file is received from the registration machine 11 in the same checkout lane in a state where the settlement is not enabled, the master machine 12-1 transmits the transaction file to another checkout machine, that is, the satellite machine 12-2 in the same checkout lane connected via the network.

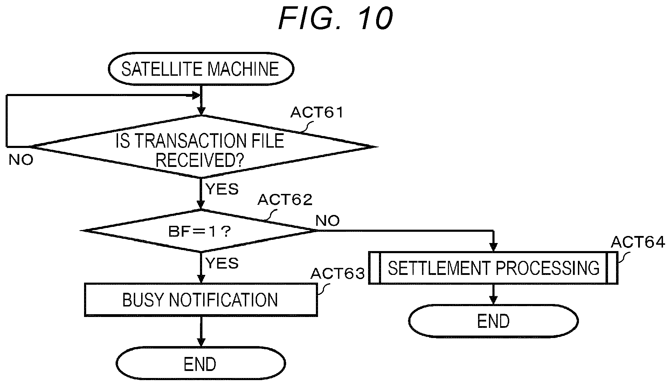

Subsequently, the main operation of the satellite machine 12-2 to which the transaction file is transmitted from the master machine 12-1 will be described with reference to FIG. 10. FIG. 10 is a flowchart illustrating a third information processing procedure executed by a processor 61-2 of the satellite machine 12-2 according to the settlement program.

The processor 61-2 waits for the reception of the transaction file as ACT 61. If a communication unit 65-2 receives the transaction file transmitted from the master machine 12-1 arranged in the same checkout lane, the processor 61-2 determines YES in ACT 61 and proceeds to ACT 62. The processor 61-2 examines the busy flag BF as ACT 62.

If the busy flag BF is "1", that is, the settlement of the previous customer is being processed, the processor 61-2 determines YES in ACT 62 and proceeds to ACT 63. The processor 61-2 controls to transmit a busy notification command to the registration machine 11 as ACT 63. By this control, as described in the sequence diagram of FIG. 13, a busy notification command is transmitted from the satellite machine 12-2 to the registration machine 11. As described above, the processor 61-2 completes the third information processing.

On the other hand, if the busy flag BF is "0", that is, if the transaction file is received during an idle period in which the settlement processing is not being executed, the processor 61-2 determines NO in ACT 62 and proceeds to ACT 64. The processor 61-2 executes the settlement processing as ACT 64.

The settlement processing is executed in the same procedure as the settlement processing of the master machine 12-1 described with reference to FIG. 9. That is, the processor 61-2 changes the busy flag BF to "1" as ACT 41. Further, the processor 61-2 sets the screen of a touch panel 68-2 as the standby screen as ACT 42. Further, the processor 61-2 turns on the patrol lamp 71 in blue as ACT 43.

If the processing of ACT 41 to ACT 43 is completed, the processor 61-2 controls to transmit the settlement enable notification command to the registration machine 11 as ACT 44. By this control, as described in the sequence diagram of FIG. 12, the settlement enable notification command is transmitted from the satellite machine 12-2 to the registration machine 11. The settlement enable notification command includes a checkout machine ID of the satellite machine 12-2. As a result, as described above, in the registration machine 11, the checkout destination notification screen SCc including the message MSa for guiding the customer to the satellite machine 12-2 is displayed.

The processor 61-2 which transmitted the settlement enable notification command waits for the execution instruction command as ACT 45. If the execution instruction command is received from the registration machine 11, the processor 61-2 controls to transmit the execution response command to the registration machine 11 as ACT 47. Further, the processor 61-2 updates the screen of the touch panel 68-2 to the payment method selection screen SCe as ACT 47.

The processor 61-2 controlling the display of the payment method selection screen SCe waits for one of the payment methods to be selected as ACT 48. Then, if the payment method is selected, the processor 61-2 updates the screen of the touch panel 68-2 to the settlement screen SCf as ACT 49. Further, the processor 61-2 flickers the patrol lamp 71 in blue as ACT 50.

The processor 61-2 which completed the processing of ACT 49 and ACT 50 waits for the checkout button BTI to be input as ACT 51. Then, if the checkout button BTl is input, the processor 61-2 executes the settlement of the transaction as ACT 52. If the settlement of the transaction is completed, the processor 61-2 controls a printer 69-2 as ACT 53 and dispenses the transaction receipt.

After that, the processor 61-2 waits for t seconds to elapse as ACT 54. After t seconds elapse, the processor 61-2 returns the busy flag BF to "0" as ACT 55. As described above, the processor 61-2 completes the third information processing.

As described above, the processor 61-2 of the satellite machine 12-2 realizes the function of the second settlement unit 613 by the processing of ACT 61, ACT 62, and ACT 64.

Thus, the transaction processing system 10 can settle many transactions in a short time by efficiently operating the two checkout machines 12 of the master machine 12-1 and the satellite machine 12-2 in an environment where the master machine 12-1 can normally receive the transaction file from the registration machine 11.

On the other hand, in an environment where the master machine 12-1 cannot normally receive the transaction file, the transmission error screen SCd is displayed on the registration machine 11. Then, if the clerk 21 performs a checking operation regarding the transmission error, the error receipt RS is dispensed. Further, the transaction file of which the transmission becomes an error is stored in the hold file 17 of the server 13.

The clerk 21 who checked the transmission error screen SCd passes the error receipt RS to the customer 22 who is the target of the transaction file of which the transmission becomes an error. Then, the clerk 21 instructs the customer 22 to check out at another cashier. For example, if the satellite machine 12-2 in the same checkout lane is vacant, the clerk 21 instructs the customer to make the settlement using the error receipt RS on the satellite machine 12-2.

The customer 22 who received this instruction moves to the installation location of the satellite machine 12-2. Then, the customer operates the scanner 67 to scan the barcode BC of the error receipt RS.

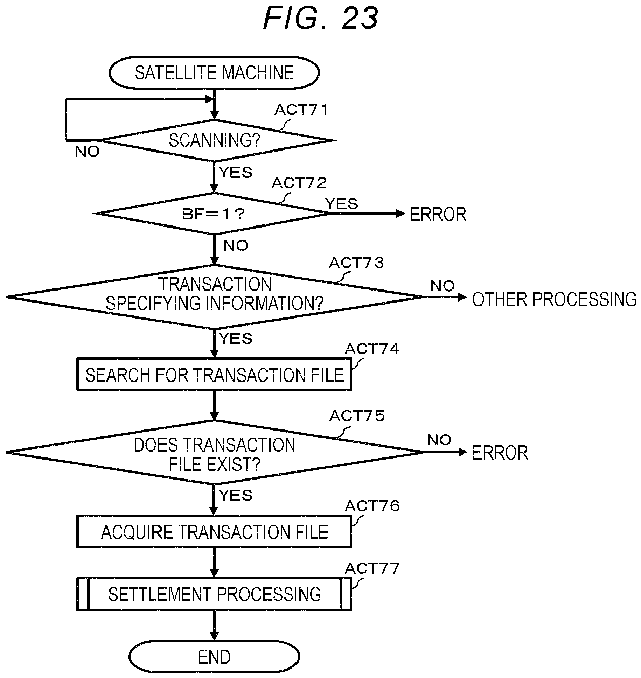

FIG. 23 is a flowchart illustrating a fourth information processing procedure executed by the processor 61-2 of the satellite machine 12-2 according to the settlement program. The processor 61-2 waits for the barcode to be scanned as ACT 71. If the barcode is scanned by the scanner 67, the processor 61-2 determines YES in ACT 71 and proceeds to ACT 72. The processor 61-2 examines the busy flag BF as ACT 72.

If the busy flag BF is "1", that is, the settlement is being executed, the processor 61-2 determines YES in ACT 72. The processor 61-2 sets barcode scanning as an error. As described above, the satellite machine 12-2 in which the settlement is being executed cannot execute the fourth information processing.

If the busy flag BF is "0", that is, if the processor 61-2 is in an idle period in which the settlement processing is not executed, the processor 61-2 determines NO in ACT 72 and proceeds to ACT 73. The processor 61-2 checks whether or not the barcode is the barcode BC of the transaction specifying information printed on the error receipt RS as ACT 73. If a barcode other than the barcode BC of the transaction specifying information is scanned, the processor 61-2 executes other processing based on the barcode data. It is noted that the other processes are not particularly limited.

If the barcode BC of the transaction specifying information is scanned, the processor 61-2 determines YES in ACT 73 and proceeds to ACT 74. The processor 61-2 accesses the server 13 to be connected via the network 15 and searches for the hold file 17 as ACT 74. Then, the processor 61-2 determines whether or not there exists the transaction file in which the settlement information 18 specified by the transaction specifying information is described as ACT 75. Herein, if the corresponding transaction file is not stored in the hold file 17, the processor 61-2 determines NO in ACT 75. The processor 61-2 sets the barcode scanning as an error.

On the other hand, if the corresponding transaction file is stored in the hold file 17, the processor 61-2 determines YES in ACT 75 and proceeds to ACT 76. The processor 61-2 acquires the transaction file from the hold file 17 as ACT 76. Then, the processor 61-2 executes the above-mentioned settlement processing based on the settlement information described in the transaction file as ACT 77. As described above, the processor 61-2 completes the fourth information processing.

As described above, the processor 61-2 of the satellite machine 12-2 realizes the function of the reading unit 614 by executing the processing of ACT 71 in cooperation with a scanner 67-2. The processor 61-2 realizes the function of the acquisition unit 615 by the processing of ACT 74 to ACT 76. The processor 61-2 realizes the function of the third settlement unit 616 by the processing of ACT 77.

Thus, even if the transaction file cannot be transmitted to the master machine 12-1, the customer 22 operates the scanner 67 of the satellite machine 12-2 to scan the barcode BC of the error receipt RS, so that it is possible to settle the transaction.

On the other hand, if the transmission error screen SCd is checked and the satellite machine 12-2 in the same checkout lane is not vacant, the clerk instructs the customer to make the settlement using the error receipt RS in the proxy device 14 installed in the service counter.

The customer 22 who received this instruction moves to the location where the proxy device 14 is installed. Then, the customer operates the scanner 88 to scan the barcode BC of the error receipt RS.

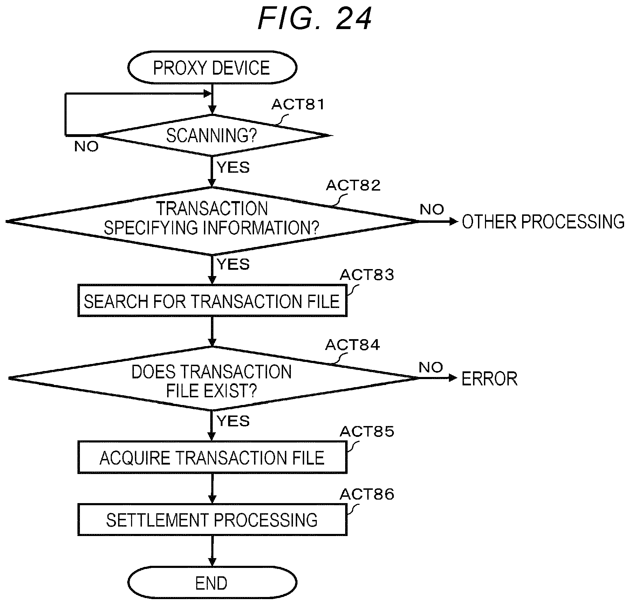

FIG. 24 is a flowchart illustrating a sixth information processing procedure executed by the processor 81 of the proxy device 14 according to the proxy program. The processor 81 waits for the barcode to be scanned as ACT 81. If the barcode is scanned by the scanner 88, the processor 81 determines YES in ACT 81 and proceeds to ACT 82. The processor 81 checks whether or not the barcode is the barcode BC of the transaction specifying information printed on the error receipt RS as ACT 82. If a barcode other than the barcode BC of the transaction specifying information is scanned, the processor 81 executes other processing based on the barcode data. The other processing is not particularly limited.

If the barcode BC of the transaction specifying information is scanned, the processor 81 determines YES in ACT 82 and proceeds to ACT 83. The processor 81 accesses the server 13 connected via the network 15 as ACT 83 and searches for the hold file 17. Then, the processor 81 determines whether or not there exists the transaction file in which the settlement information 18 specified by the transaction specifying information is described as ACT 84. Herein, if the corresponding transaction file is not stored in the hold file 17, the processor 81 determines NO in ACT 84. The processor 81 sets the scanning of the barcode as an error.

On the other hand, if the corresponding transaction file is stored in the hold file 17, the processor 81 determines YES in ACT 84 and proceeds to ACT 85. The processor 81 acquires the transaction file from the hold file 17 as ACT 85. Then, the processor 81 executes the settlement processing based on the settlement information described in the transaction file as ACT 86. That is, the processor 81 sequentially executes the processing of ACT 47 to ACT 49 and ACT 51 to ACT 53 illustrated in FIG. 9. As described above, the processor 81 completes the sixth information processing.

In this manner, the processor 81 of the proxy device 14 realizes a function of the reading unit 811 by executing the processing of ACT 81 in cooperation with the scanner 88. The processor 81 realizes a function of the acquisition unit 812 by the processing of ACT 83 to ACT 85. The processor 81 realizes a function of the settlement unit 813 by the processing of ACT 86.

Thus, even if the transaction file cannot be transmitted to the master machine 12-1, the customer 22 can still settle the transaction by operating the scanner 88 of the proxy device 14 and scanning the barcode BC of the error receipt RS.

If a state in which the transaction file cannot be transmitted from the registration machine 11 to the master machine 12-1 continues for a long time, the error receipt RS must be repeatedly handed to the customers 22 so the settlement can be processed at the satellite machine 12-2 or the proxy device 14. Therefore, a solution is desired for longer outages or the like. Accordingly, as a solution, the transaction processing system 10 can be allowed to be manually switch the transmission destination of the transaction file from the master machine 12-1 to the satellite machine 12-2.

Specifically, if the checkout machine 12 scans the bar code of the clerk ID with the scanner 67 in the idle state, the checkout machine 12 enters the clerk mode. The master switching task is set in the work that can be executed in the clerk mode.

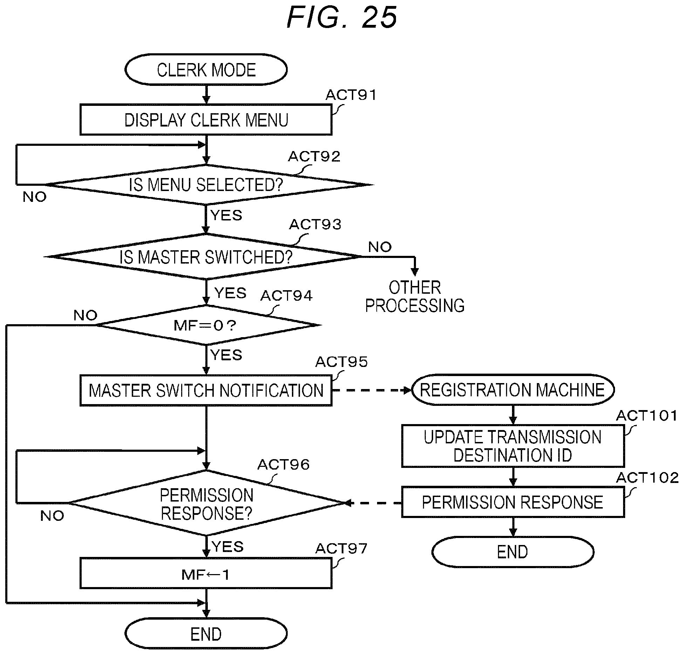

FIG. 25 is a flowchart illustrating a fifth information processing procedure executed by the processor 61-2 of the satellite machine 12-2 according to the settlement program if the clerk mode is set.

Upon the processor 61-2 entering the clerk mode, the processor 61-2 displays a task menu screen for the clerk on the touch panel 68-2 as ACT 91. The processor 61-2 waits for one of task menus to be selected as ACT 92. If the task menu is selected, the processor 61-2 determines YES in ACT 92 and proceeds to ACT 93. The processor 61-2 checks whether or not the task menu selected is for a master switching task as ACT 93. If the menu is not for the master switching task, the processor 61-2 determines NO in ACT 93 and executes other processing according to the selected task. The other processes are not particularly limited.

If master switching task is selected, the processor 61-2 determines YES in ACT 93 and proceeds to ACT 94. The processor 61-2 examines the mode flag MF as ACT 94. If the mode flag MF is "1", the satellite machine 12-2 is already switched from the satellite mode to the master mode. Therefore, the processor 61-2 determines NO in ACT 94 and completes the fifth information processing.

On the other hand, if the mode flag MF is still "0", the processor 61-2 determines YES in ACT 94 and proceeds to ACT 95. The processor 61-2 controls the transmission of the master notification command to the registration machine 11 arranged in the same checkout lane as ACT 95. By this control, the master notification command is transmitted from the communication unit 65-2 to the registration machine 11 via the network 15. The master notification command includes a checkout machine ID of the satellite machine 12-2.

The processor 31 of the registration machine 11 which received the master notification command changes the transmission destination ID stored in the storage section 331 from the checkout machine ID of the master machine 12-1 to the checkout machine ID included in the master notification command, that is, the checkout machine ID of the satellite machine 12-2 as ACT 101 of FIG. 25. The processor 31 controls to transmit the permission response command to the satellite machine 12-2 as ACT 102. By this control, the permission response command is transmitted from the registration machine 11 to the satellite machine 12-2 via the network 15.

The processor 61-2 transmitting the master notification command waits for the permission response command as ACT 96. If the permission response command is received, the processor 61-2 determines YES in ACT 96 and proceeds to ACT 97. The processor 61-2 changes the mode flag MF to "1" as ACT 97. As described above, the processor 61-2 completes the fifth information processing.

In this manner, the processor 61-2 realizes the function of the instruction unit 617 by the processing of ACT 95. The processor 61-2 realizes the function of the update unit 618 by the processing of ACT 97.

Then, in the registration machine 11, after the transmission destination ID is changed from the checkout machine ID of the master machine 12-1 to the checkout machine ID of the satellite machine 12-2, the transaction file is transmitted from the registration machine 11 to the satellite machine 12-2. At this time, the processor 61-2 of the satellite machine 12-2 executes the third information processing described in the flowchart of FIG. 19. Therefore, the processor 61-2 realizes the function of the fourth settlement unit 619 by the processing of ACT 64 of FIG. 10.

Thus, even if a failure or the like occurs in the master machine 12-1 and the transaction file cannot be received from the registration machine 11, the transmission destination of the transaction file can be quickly changed from the master machine 12-1 to the satellite machine 12-2 with a simple operation.

The patrol lamp 71 included in the master machine 12-1 or the satellite machine 12-2 is lit in blue until the transaction file is received from the registration machine 11 or the master machine 12-1. Also, even after the transaction file is received, the lighting state is maintained. Then, once the customer 22 selects a button on the payment method selection screen SCe, the lighting in blue is replaced with flickering.

In this manner, the patrol lamp 71 maintains its the lighting state when the transaction file is received, and thus, the patrol lamp 7 is switched to the flickering state only once the customer 22 starts the operation (interacts with the payment method selection screen SCe). Therefore, the clerk 21 at the registration machine 11 can recognize when the customer starts operating the checkout machine 12 when the patrol lamp 71 is changed to the flickering state.

### Modified Example of Transaction Processing System

The number of checkout machines 12 arranged in one checkout lane is not limited to two. Three or more checkout machines 12 may be arranged in one checkout lane. In this case, one machine is set as the master machine 12-1, and the rest machines are set as satellite machines 12-2. Then, a transfer order of the transaction files can be preset for each satellite machine 12-2. That is, the master machine 12-1 stores the checkout machine ID of the satellite machine 12-2 having the first transfer order in the storage section 631, and the satellite machine 12-2 having the first transfer order stores the checkout machine ID of the satellite machine 12-2 having the second transfer order in the storage section 631. Then, the satellite machine 12-2 having the lowest transfer order stores the null value in the storage section 631. Even a transaction processing system having such a configuration can apply aspects of the above-described embodiments.

The medium on which the transaction specifying information is recorded by the recording unit 313 is not limited to the receipt paper. For example, the transaction specifying information may be recorded on a portable recording medium such as a universal serial bus (USB) memory or an SD Card and passed to the customer. Further, the transaction specifying information need not be indicated in the form of a barcode. For example, the transaction specifying information may be indicated by a two-dimensional code. If another register, for example, the proxy device 14 has an optical character recognition (OCR) function, the transaction specifying information may be recorded in the form of text.

The installation location of the proxy device 14 is not limited to the service counter. In addition, a general POS terminal installed in the face-to-face cashier may be used as a proxy device.

Among the functions realized by the processor 61, the checkout machine 12 may omit the functions as the instruction unit 617, the update unit 618, and the fourth settlement unit 619. That is, if the master machine 12-1 cannot receive the transaction file, the problem may be dealt with by the settlement method using the error receipt RS until the error is recovered.

In the checkout machine 12, the functions of the reading unit 614 and the acquiring unit 615 may be omitted from among the functions realized by the processor 61. That is, the satellite machine 12-2 can be excluded as a choice of another register.

A busy state in which the busy flag BF is "1" is not limited to just during the execution of the settlement processing. For example, the busy flag BF may be set to "1" to indicate busy state if the receipt paper of the printer 69 runs out.

In an embodiment, if the checkout machine 12 receives the transaction file in a state where settlement can be made, the checkout machine 12 displays the payment method selection screen SCe. As another embodiment, if the transaction file is received in a state where settlement can be made, a guidance screen prompting the customer 22 to begin operations can be displayed. Then, after the customer 22 touches the guidance screen, the payment method selection screen SCe may be displayed. In this case, the patrol lamp 71 may be changed from the constant state to the flickering state in response to the touch of the guidance screen.

In some examples, the patrol lamp 71 may be changed from a flickering state to a constant state instead of changing from the constant state to the flickering state. Alternatively, the operator may be notified of the operation start of the customer by changing of the lighting (lamp) color.

The procedure of the fifth information processing executed by the processor of the satellite machine may be controlled by another program instead of the settlement program.

The hold file 17 may be provided by the registration machine 11 instead of the server 13. In this case, the registration machine 11 of each checkout lane includes the hold file 17 and stores the transaction file of its own lane. Alternatively, any one of the registration machines 11 may include the hold file 17 and the collectively store transaction files for the checkout lanes.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. A transaction processing system, comprising:
a registration machine (11) connectable to a plurality of settlement devices (12) via a network, the plurality of settlement devices (12) including a first settlement device and a second settlement device, wherein
the registration machine is configured to:
generate settlement information required for settlement of a merchandise transaction with a customer based on the registration of items in the merchandise transaction,
transmit the settlement information to the first settlement device,
if the transmission of the settlement information to the first settlement device fails, record transaction specifying information on a medium that can be given to the customer, the transaction specifying information identifying the settlement information corresponding to the merchandise transaction, and
store the settlement information in a storage unit if the transmission of the settlement information to the first settlement device fails; and
the first settlement device is configured to
execute settlement processing based on the settlement information if the first settlement device is available for settlement processing, and
transfer the settlement information to the second settlement device if the first settlement is unavailable for settlement processing.

2. The transaction processing system according to claim 1, wherein the registration machine is further configured to:
notify an operator if the transmission of the settlement information to the first settlement device fails.

3. The transaction processing system according to claim 1 or 2, further comprising:
a proxy settlement device configured to:
read the transaction specifying information from the medium;
acquire the settlement information corresponding to the transaction specifying information from the storage unit; and
execute settlement processing according to the acquired settlement information.

4. The transaction processing system according to claim 3, wherein the medium is paper and the transaction specifying information is encoded in a barcode printed on the paper.

5. The transaction processing system according to claim 3 or 4, wherein the storage unit is in a server connected to the network.

6. The transaction processing system according to any one of claims 1 to 5, wherein
an address of the first settlement device is stored in the storage unit, and
the address can be changed in response to a request from the second settlement device.

7. The transaction processing system according to any one of claims 1 to 6, wherein the medium is paper and the transaction specifying information is encoded in a barcode printed on the paper.

8. The transaction processing system according to any one of claims 1 to 7, wherein the storage unit is in a server connected to the network.

9. A registration device for a transaction processing system, the registration device comprising:
a communication interface connectable to a plurality of settlement devices via a network, the plurality of settlement devices including a first settlement device and a second settlement device; and
a processor configured to:
generate settlement information required for settlement of a merchandise transaction with a customer based on the registration of items in the merchandise transaction,
transmit the settlement information to the first settlement device,
if the transmission of the settlement information to the first settlement device fails, record transaction specifying information on a medium that can be given to the customer, the transaction specifying information identifying the settlement information corresponding to the merchandise transaction, and
store the settlement information in a storage unit if the transmission of the settlement information to the first settlement device fails.

10. The registration device according to claim 9, wherein the processor is further configured to:
notify an operator if a transmission error occurs in the transmission of the settlement information to the first settlement device.

11. The registration device according to claim 9 or 10, wherein
an address of the first settlement device is stored in the storage unit, and
the address can be changed in response to a request from the second settlement device.

12. The registration device according to any one of claims 9 to 11, wherein the medium is paper and the transaction specifying information is encoded in a barcode printed on the paper.

13. A non-transitory, computer-readable storage medium storing program instructions which when executed by a registration device cause the registration device to perform a method comprising:
generate settlement information required for settlement of a merchandise transaction with a customer based on the registration of items in the merchandise transaction,
transmit the settlement information to a first settlement device of a plurality of settlement devices;
if the transmission of the settlement information to the first settlement device fails, record transaction specifying information on a medium that can be given to the customer, the transaction specifying information identifying the settlement information corresponding to the merchandise transaction; and
store the settlement information in a storage unit if the transmission of the settlement information to the first settlement device fails.

14. The non-transitory, computer-readable storage medium according to claim 13, the method further comprising:
notify an operator if a transmission error occurs in the transmission of the settlement information to the first settlement device.

15. The non-transitory, computer-readable storage medium according to claim 13 or 14, wherein
an address of the first settlement device is stored in the storage unit, and
the address can be changed in response to a request from a second settlement device in the plurality of settlement devices.
